# EUROPEAN PATENT APPLICATION

(11) **EP 4 002 258 A1**
(43) Date of publication of application: **25.05.2022**
(21) Application number: 21208985.8
(22) Date of filing: 18.11.2021
(51) Int. Cl.: G06Q 30/06

(54) **ELECTRONIC PARTS SALE PLATFORM SERVICE ITEM SEARCH METHOD, DEVICE, AND COMPUTER APPARATUS**

(30) Priority: 20.11.2020 CN 202011312142
(71) Applicant: Shenzhen Sekorm Component Network Co., Ltd, Shenzhen, Guangdong (CN)
(72) Inventor: CHEN, Zhen, Shenzhen (CN)
(74) Representative: Westphal, Mussgnug & Partner, Patentanwälte mbB

(57) **Abstract**

The present invention relates to an electronic parts sale platform service item search method, device, and computer apparatus. The method includes: S1, setting up service content corresponding to each of service items, establishing a corresponding relationship between the service item and the service content, and releasing the corresponding relationship to an electronic parts sale platform; S2, the electronic parts sale platform receiving search content inputted by a user, and disintegrating the search content into multiple search keywords; S3, seeking service content that matches with each of the search keywords, and identifying a service item corresponding to the search keywords based on matched service content and the corresponding relationship; and S4, displaying a service portal corresponding to the service item. The present invention disintegrates search content into multiple search keywords, and uses the search keywords that are obtained through disintegration to conduct search for the service item, so that accurate and high-efficiency searching for a service item can be realized.

## Description

### FIELD OF THE INVENTION

The present invention relates to the field of electronic parts sale platform, and more particularly to an electronic parts sale platform service item search method, device, and computer apparatus.

### DESCRIPTION OF THE RELATED ART

An electronic parts sale platform provides exhibition and transaction of all sorts of electronic parts, allowing users to purchase electronic parts online. Existing electronic parts sale platforms are capable of searching products of electronic parts according to keywords entered by users and displaying searched-out electronic parts. To improve the use experience of the users, the electronic parts sale platform adds certain service items, such as product consultation, order inquiry, and after service. Heretofore, such service items are arranged in a fixed manual, and searching must be performed by the users for seeking in a multi-level fashion, making the experience poor. Further, such services items are different from electronic parts, and the ways of searching electronic parts that have been adopted currently are not applicable to searching for the service items. There is no high efficiency way of searching.

### SUMMARY OF THE INVENTION

The technical issue that the present invention aims to resolve is to provide, in view of the above-described deficiency of the prior art, an electronic parts sale platform service item search method, device, and computer apparatus.

The technical solution that the present invention adopts to resolve the technical issue is to construct an electronic parts sale platform service item search method, which comprises:
S1, setting up service content corresponding to each of service items, establishing a corresponding relationship between the service item and the service content, and releasing the corresponding relationship to an electronic parts sale platform;
S2, the electronic parts sale platform receiving search content inputted by a user, and disintegrating the search content into multiple search keywords;
S3, seeking service content that matches with each of the search keywords, and identifying a service item corresponding to the search keywords based on matched service content and the corresponding relationship; and
S4, displaying a service portal corresponding to the service item.

Further, the electronic parts sale platform service item search method according to the present invention further comprises, after Step S4:
S5, the service portal receiving an inquiry message inputted by the user and transmitting the inquiry message to a service processing terminal for displaying.

Further, in the electronic parts sale platform service item search method according to the present invention, disintegrating the search content into multiple search keywords of Step S2 comprises:
disintegrating the search content into multiple search keywords according to a service lexicon database, the search keywords obtained through disintegrating being consistent with content keywords of the service lexicon database, wherein the service lexicon database includes the content keywords of all service content.

Further, in the electronic parts sale platform service item search method according to the present invention, seeking out service content matching with each of the search keywords of Step S3 comprises: seeking out content keywords included in the service lexicon database and matching with the search keywords.

Further, in the electronic parts sale platform service item search method according to the present invention, if no service content that matches the search keywords is sought out in Step S3, checking whether the disintegrated search keywords are disintegrable for a second round or not; and
if yes, subjecting the disintegrated search keywords to second-round disintegrating according to the service lexicon database, and seeking out service content that matches with the search keywords obtain through the second-round disintegrating.

Further, in the electronic parts sale platform service item search method according to the present invention, if multiple service items are identified in Step S3, Step S4 comprises:
S41, ranking the service items according to quantities of the search keywords to which the service items correspond, and displaying the service portal corresponding to each of the service items in sequence from high to low according to the quantities.

Further, in the electronic parts sale platform service item search method according to the present invention, displaying the service portal corresponding to each of the service items in sequence from high to low according to the quantities of Step S41 comprises:
displaying service portals to which a predetermined number of service items correspond in sequence from high to low according to the quantities.

Further, in the electronic parts sale platform service item search method according to the present invention, the service portal is one of a text-based link, an image-based link, or a text-image hybrid link.

Further, the present invention also provides an electronic parts sale platform the service item search device, which comprises:
a set-up unit, which is operable for setting up service content corresponding to each of service items, establishing a corresponding relationship between the service item and the service content, and releasing the corresponding relationship to an electronic parts sale platform;
a disintegrating unit, which is operable for the electronic parts sale platform receiving search content inputted by a user, and disintegrating the search content into multiple search keywords;
a seeking unit, which is operable for seeking service content that matches with each of the search keywords, and identifying a service item corresponding to the search keywords based on matched service content and the corresponding relationship; and
a displaying unit, which is operable for displaying a service portal corresponding to the service item.

Further, the present invention also provides a computer apparatus, which comprises a storage and a processor;
the storage storing a computer program; and
the processor executing the computer program stored in the storage in order to perform the electronic parts sale platform service item search method described above.

Implementation of the electronic parts sale platform service item search method, device, and computer apparatus according to the present invention provides the following beneficial effects. The present invention disintegrates search content into multiple search keywords, and uses the search keywords that are obtained through disintegration to conduct search for the service item, so that accurate and high-efficiency searching for a service item can be realized.

### BRIEF DESCRIPTION OF THE DRAWINGS

A detailed description of the present invention will be provided below with reference to the attached drawings and embodiments, and in the drawings:
FIG. 1 is a flow chart illustrating an electronic parts sale platform service item search method provided according to an embodiment; and
FIG. 2 is a flow chart illustrating an electronic parts sale platform service item search method provided according to an embodiment.

### DETAILED DESCRIPTION OF PREFERRED EMBODIMENTS OF THE INVENTION

For better understanding of the technical features, purposes, and efficacy of the present invention, embodiments of the present invention will be described in detail with reference to the drawings.

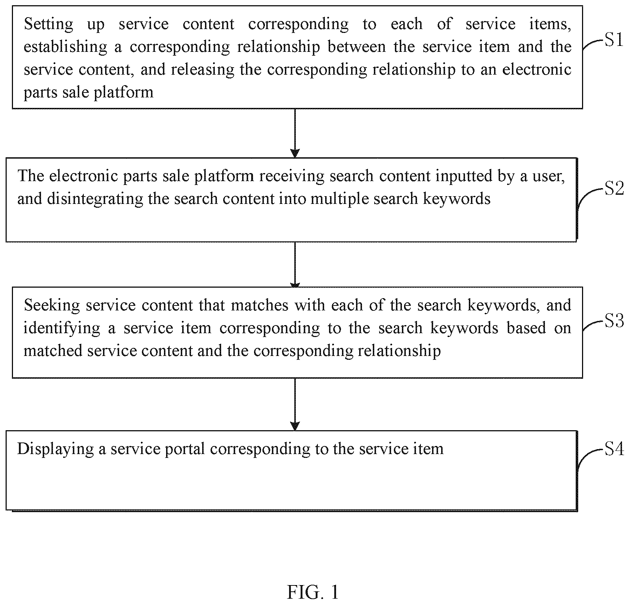

In a preferred embodiment, referring to FIG. 1, an electronic parts sale platform of the instant embodiment is configured for exhibition and transaction of all sorts of electronic parts, and a user may search for desired electronic parts in the electronic parts sale platform. The electronic parts sale platform also provides the user with various service items, such as product consultation, order inquiry, and after services, allowing the user to quickly find out these service items. The instant embodiment enables the user to directly search for these service items in a search block. Specifically, an electronic parts sale platform service item search method comprises the following steps:
S1, setting up service content corresponding to each of service items, establishing a corresponding relationship between the service item and the service content, and releasing the corresponding relationship to an electronic parts sale platform. Each service item has a particular function and different service items have different functions, and to establish connection of the service items, the instant embodiment summarizes the function that is realizable by each service item to set up the service content corresponding to each service item and to establish the corresponding relationship between the service item and the service content, namely each service item having its own corresponding service content, such that the service item is solely locatable through such service content. After the corresponding relationship is established, the service item, the service content, and the corresponding relationship are released to the electronic parts sale platform; optionally, the service item, the service content, and the corresponding relationship being released to the electronic parts sale platform refers to the service item, the service content, and the corresponding relationship being released to a backstage server or a cloud database of the electronic parts sale platform.
S2, the electronic parts sale platform receiving search content inputted by a user, and disintegrating the search content into multiple search keywords. The user may log in the electronic parts sale platform with a smart terminal, and input the search content in a search block of the electronic parts sale platform; optionally, the user may conduct input of the search content by means of a keyboard, a touch screen, or voice. After conducting the input, the user clicks for search, and the smart terminal uploads the search content to the backstage server of the electronic parts sale platform to allow the backstage server to disintegrate the search content into multiple search keywords. Generally, the search content inputted by the user includes both an effective message and an ineffective message, and the existing technology uses the search content as entirety for match retrieval, and this results in the ineffective message being included, not only affecting accuracy of retrieval, but also potentially causing null retrieval of the desired service item. To resolve such a problem, the instant embodiment adopts a disintegrated search process by disintegrating the search content into multiple search keywords and using the disintegrated search keywords individually for match.
S3, seeking service content that matches with each of the search keywords, and identifying a service item corresponding to the search keywords based on matched service content and the corresponding relationship. After the search content is disintegrated into the multiple search keywords, service content that matches with each of the search keywords is sought, and after the search-keyword-matched service content is sought out, the service item corresponding to the keywords can be found according to the service content and the corresponding relationship.
S4, displaying a service portal corresponding to the service item. The backstage server stores a service portal for each service item, and the backstage server, after identifying the service item corresponding to the search keywords according to the matched service content and the corresponding relationship, transmits the service portal corresponding to the service item to the smart terminal, and displays the service portal on the smart terminal. Optionally, the service portal can be a text-based link, an image-based link, or a text-image hybrid link, and the user may enter the corresponding service item by way of the service portal.

The instant embodiment disintegrates search content into multiple search keywords, and uses the search keywords that are obtained through disintegration to conduct search for the service item, so that accurate and high-efficiency searching for a service item can be realized.

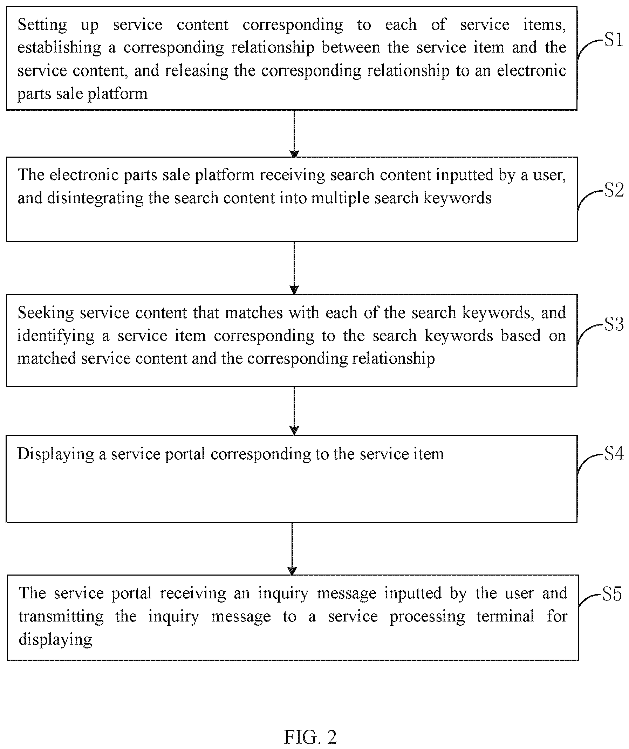

In an embodiment, referring to FIG. 2, the electronic parts sale platform service item search method further comprises, after Step S4:
S5, the service portal receiving an inquiry message inputted by the user and transmitting the inquiry message to a service processing terminal for displaying. After the smart terminal displays the service portal, the user may directly input the inquiry message in the service portal; or alternatively, the user may visit, by way of the service portal, an interface corresponding to the service item to then input the inquiry message. The smart terminal sends the inquiry message to the backstage server, and the backstage server forwards the inquiry message to a corresponding service processing terminal, in order to make a response to the inquiry message. The service processing terminal uploads a response message to the backstage server, and the backstage server sends the response message back to the corresponding smart terminal, so that the user receives a service message of the service item.

In the instant embodiment, the user may input the inquiry message at the site of the service portal so found, so that the user may enjoy the service item provided by the electronic parts sale platform.

In an embodiment, in the electronic parts sale platform service item search method, disintegrating the search content into multiple search keywords of Step S2 comprises: disintegrating the search content into multiple search keywords according to a service lexicon database, the search keywords obtained through disintegrating being consistent with content keywords of the service lexicon database, wherein the service lexicon database includes the content keywords of all service content. In other words, in the instant embodiment, disintegrating search content into search keywords need to make reference to the content keywords of the service lexicon database, and if the search content includes content keywords of the service lexicon database, then the content that is consistent with the content keywords is treated as the search keywords. If part content of the search content has no content keywords corresponding thereto in the service lexicon database, this indicates such a part of the search content is ineffective content, and no search keyword is generated for this piece of ineffective content to avoid ineffective search. The instant embodiment makes search keywords only for content of the search content that matches with the service lexicon database, so as to ensure effectiveness of the search keywords and seek out the service item desired by the user in an accurate and high efficiency way.

In an embodiment, in the electronic parts sale platform service item search method, seeking service content that matches with each of the search keywords of Step S3 comprises: seeking out content keywords included in the service lexicon database and matching with the search keywords, namely content of the search content that can be found in the service lexicon database being solely treated as the search keywords, and further, since each of the content keywords of the service lexicon database has a corresponding service item in respect of the corresponding relationship, the corresponding service item can be definitely found, so that ineffective search can be avoided, and search accuracy and search efficiency can be increased.

In an embodiment, in the electronic parts sale platform service item search method, the service content that matches with each of the search keywords is found in Step S3, and a service item corresponding to the search keywords can be identified according to the matched service content and the corresponding relationship. If no matched service content can be sought out for all the search keywords generated in this round, then check is made as to whether the disintegrated search keywords are disintegrable for a second round or not. Second-round disintegrating refers to subjecting the search keywords that are obtained through disintegrating to disintegrating again, and the way of disintegrating may refer to the above embodiment, and repeated description will be omitted. If the disintegrated search keywords allow for second-round disintegrating, then the disintegrated search keywords are subjected to second-round disintegrating according to the service lexicon database, and the service content that matches with the search keywords obtained through the second-round disintegrating are sought. If the disintegrated search keywords do not allow for the second-round disintegrating, then a prompt is made for the user to do input again. On the basis of no result of search for the first-round disintegrating, the instant embodiment conducts the second-round disintegrating in order to reduce the content of the search keywords for increasing probability of match.

In an embodiment, in the electronic parts sale platform service item search method, if multiple service items are identified in Step S3, then Step S4 comprises: S41, ranking the service items according to quantities of the search keywords to which the service items correspond, and displaying the service portal corresponding to each of the service items in sequence from high to low according to the quantities. In other words, the quantity of the search keywords to which each service item corresponds is counted, and the larger the quantiy, the higher the degree of match between the service item and the search content inputted by the user, and thus the better of meeting the needs of the user. Thus, the instant embodiment conducts counting and ranking of the quantity of the search keywords to which each of the service items obtained through searching, and displays the service portal corresponding to each of the service items in sequence from high to low according to the quantities. Optionally, generally, some that have relatively high degrees of match are most likely to meet the need of the user, and there is no need to display all the results of search. Thus, displaying is made for the service portals to which a predetermined number of service items correspond in sequence from high to low according to the quantities, wherein the predetermined number is determined as desired.

In a preferred embodiment, an electronic parts sale platform of the instant embodiment is configured for exhibition and transaction of all sorts of electronic parts, and a user may search for desired electronic parts in the electronic parts sale platform. The electronic parts sale platform also provides the user with various service items, such as product consultation, order inquiry, and after services, allowing the user to quickly find out these service items. The instant embodiment enables the user to directly search for these service items in a search block. Specifically, an electronic parts sale platform the service item search device comprises:
a set-up unit, which is configured for setting up service content corresponding to each of service items, establishing a corresponding relationship between the service item and the service content, and releasing the corresponding relationship to an electronic parts sale platform. Each service item has a different function, and to establish connection of the service items, the instant embodiment summarizes the function that is realizable by each service item to set up the service content corresponding to each service item and to establish the corresponding relationship between the service item and the service content, namely each service item having its own corresponding service content, such that the service item is solely locatable through such service content. After the corresponding relationship is established, the service item, the service content, and the corresponding relationship are released to the electronic parts sale platform. Optionally, the service item, the service content, and the corresponding relationship being released to the electronic parts sale platform refers to the service item, the service content, and the corresponding relationship being released to a backstage server or a cloud database of the electronic parts sale platform.
a disintegrating unit, which is configured for the electronic parts sale platform receiving search content inputted by a user, and disintegrating the search content into multiple search keywords. The user may log in the electronic parts sale platform with a smart terminal, and input the search content in the search block of the electronic parts sale platform; optionally, the user may conduct input of the search content by means of a keyboard, a touch screen, or voice. After conducting the input, the user clicks for search, and the smart terminal uploads the search content to the backstage server of the electronic parts sale platform to allow the backstage server to disintegrate the search content into multiple search keywords. Generally, the search content inputted by the user includes both an effective message and an ineffective message, and the existing technology uses the search content as entirety for match retrieval, and this results in the ineffective message being included, not only affecting accuracy of retrieval, but also potentially causing null retrieval of the desired service item. To resolve such a problem, the instant embodiment adopts a disintegrated search process by disintegrating the search content into multiple search keywords and using the disintegrated search keywords individually for match.
a seeking unit, which is configured for seeking service content that matches with each of the search keywords, and identifying a service item corresponding to the search keywords based on matched service content and the corresponding relationship. After the search content is disintegrated into the multiple search keywords, service content that matches with each of the search keywords is sought, and after the search-keyword-matched service content is sought out, the service item corresponding to the keywords can be found according to the service content and the corresponding relationship.
a displaying unit, which is configured for displaying a service portal corresponding to the service item. The backstage server stores a service portal for each service item, and the backstage server, after identifying the service item corresponding to the search keywords according to the matched service content and the corresponding relationship, transmits the service portal corresponding to the service item to the smart terminal, and displays the service portal on the smart terminal. Optionally, the service portal can be a text-based link, an image-based link, or a text-image hybrid link, and the user may enter the corresponding service item by way of the service portal.

The instant embodiment disintegrates search content into multiple search keywords, and uses the search keywords that are obtained through disintegration to conduct search for the service item, so that accurate and high-efficiency searching for a service item can be realized.

In a preferred embodiment, a computer apparatus comprises a storage and a processor. The storage is configured to store a computer program and the processor is configured to execute the computer program stored in the storage in order to perform the electronic parts sale platform service item search method provided in the above embodiment.

A progressive way is adopted to illustrate various embodiments of the disclosure. The description of each embodiment focuses on key features that are different from those of other embodiments. Similar parts of the various embodiments may refer to each other. For the devices disclosed in the embodiments, since they are corresponding to the methods disclosed in the embodiments, and the descriptions thereof are relatively simplified, and the related parts may refer to the descriptions of the methods.

Skilled artisans may further notice that the units and method steps of each example of the embodiments disclosed in this disclosure can be implemented in hardware or computer software or a combination of the two. To clearly illustrate the exchangeability of hardware and software, the illustration provided above demonstrates the components and steps of each example with a general description according to functions thereof. Whether such functions can be implemented with hardware or software is determined by the specific application and design requirement conditions of the technical solution. Skilled artisans may adopt different ways to implement the functions so described for each specific application, and such implementations should not be regarded as exceeding the scope of the present invention.

The steps of the method or algorithm described with reference to the embodiments disclosed in the disclosure can be implemented directly by means of hardware, or by means of software modules executable in a processor, or a combination of the two. The software modules may be loaded in a random access memory (RAM), an internal storage, a read only memory (ROM), an electrically programmable ROM, an electrically erasable ROM, a register, a hard disc drive, a mobile magnetic drive, a CD-ROM, or any other forms of storage medium known in the field.

The embodiments provided above are only for illustration of the technical thoughts and features of the present invention, for the purposes to help those skilled in the art to understand the contents of the present invention and to accordingly put into practice, and should not be construed as limiting to the scope of protection for the present invention. All variations and modifications that are considered equivalent to the scope of the appended claims of the application belong to the scope of the present invention as defined solely by the appended claims.

## Claims

1. An electronic parts sale platform service item search method, **characterized by** comprising:
S1, setting up service content corresponding to each of service items, establishing a corresponding relationship between the service item and the service content, and releasing the corresponding relationship to an electronic parts sale platform;
S2, the electronic parts sale platform receiving search content inputted by a user, and disintegrating the search content into multiple search keywords;
S3, seeking service content that matches with each of the search keywords, and identifying a service item corresponding to the search keywords based on matched service content and the corresponding relationship; and
S4, displaying a service portal corresponding to the service item.

2. The electronic parts sale platform service item search method according to claim 1, **characterized by** further comprising, after Step S4:
S5, the service portal receiving an inquiry message inputted by the user and transmitting the inquiry message to a service processing terminal for displaying.

3. The electronic parts sale platform service item search method according to claim 1, **characterized in that** disintegrating the search content into multiple search keywords of Step S2 comprises:
disintegrating the search content into multiple search keywords according to a service lexicon database, the search keywords obtained through disintegrating being consistent with content keywords of the service lexicon database, wherein the service lexicon database includes the content keywords of all service content.

4. The electronic parts sale platform service item search method according to claim 3, **characterized in that** seeking out service content matching with each of the search keywords of Step S3 comprises: seeking out content keywords included in the service lexicon database and matching with the search keywords.

5. The electronic parts sale platform service item search method according to claim 3, **characterized in that** if no service content that matches the search keywords is sought out in Step S3, checking whether the disintegrated search keywords are disintegrable for a second round or not; and
if yes, subjecting the disintegrated search keywords to second-round disintegrating according to the service lexicon database, and seeking out service content that matches with the search keywords obtain through the second-round disintegrating.

6. The electronic parts sale platform service item search method according to claim 1, **characterized in that** if multiple service items are identified in Step S3, Step S4 comprises:
S41, ranking the service items according to quantities of the search keywords to which the service items correspond, and displaying the service portal corresponding to each of the service items in sequence from high to low according to the quantities.

7. The electronic parts sale platform service item search method according to claim 6, **characterized in that** displaying the service portal corresponding to each of the service items in sequence from high to low according to the quantities of Step S41 comprises:
displaying service portals to which a predetermined number of service items correspond in sequence from high to low according to the quantities.

8. The electronic parts sale platform service item search method according to claim 1, **characterized in that** the service portal is one of a text-based link, an image-based link, or a text-image hybrid link.

9. An electronic parts sale platform the service item search device, **characterized by** comprising:
a set-up unit, which is operable for setting up service content corresponding to each of service items, establishing a corresponding relationship between the service item and the service content, and releasing the corresponding relationship to an electronic parts sale platform;
a disintegrating unit, which is operable for the electronic parts sale platform receiving search content inputted by a user, and disintegrating the search content into multiple search keywords;
a seeking unit, which is operable for seeking service content that matches with each of the search keywords, and identifying a service item corresponding to the search keywords based on matched service content and the corresponding relationship; and
a displaying unit, which is operable for displaying a service portal corresponding to the service item.

10. A computer apparatus, **characterized by** comprising a storage and a processor;
the storage being configured for storing a computer program; and
the processor being configured for executing the computer program stored in the storage in order to perform the electronic parts sale platform service item search method according to any one of claims 1-8.
